# EUROPEAN PATENT APPLICATION

(11) **EP 2 353 541 A2**
(43) Date of publication of application: **10.08.2011**
(21) Application number: 11153178.6
(22) Date of filing: 03.02.2011
(51) Int. Cl.: A61C 5/12

(54) **Dental matrix band**

(30) Priority: 04.02.2010 US 301341 P
(71) Applicant: KerrHawe S.A., 6934 Bioggio (CH)
(72) Inventor: Kilcher, Beat, 6935 Bosco Luganese (CH); Da Rold, Marco, 6951 Odogno (CH)
(74) Representative: Findlay, Alice Rosemary

(57) **Abstract**

The dental matrix band 10 includes an elongated body 12 having first and second opposing ends 14a,b adapted to wrap around a tooth to be restored, and having first and second opposing longitudinal edges 16a,b extending between the first and second opposing ends 14a,b. The dental matrix band 10 further includes a first line of weakness 18 in the elongated body 12 where the elongated body 12 is separable along the first line of weakness 18. The dental matrix band 10 incudes a fixture 24 adjacent the first line of weakness 18. The dental matrix band 10 may further include a second line of weakness 20. The dental matrix band 10 may include an annealed section.

## Description

This application generally relates to dental products, and in particular, to dental matrix bands.

Dental matrix bands, commonly referred to as matrix strips, are relatively small thin elongated strips of flexible material that are used in various dental procedures, Generally, matrix bands are used to isolate or shield the sides of adjacent teeth from one another, For example, a dental procedure where matrix bands are commonly used is the restoration of Class II dental cavities or caries.

In the reconstruction of carious tooth surfaces, a tight anatomically self-contouring matrix band is preferred. This is particularly true at the interproximal, gingival and subgingival portion of the tooth to be rebuilt or restored. The matrix band acts as an anatomical tooth-encircling retaining wall for the filling material that replaces and restores the carious surfaces of a tooth to its original anatomy. The carious surfaces may be restored with silver amalgam, composites or other suitable material. The anatomically formed matrix band retains the shape of the restorative material until the filling material hardens, usually in minutes. Thereinafter, the matrix band is opened and removed from the tooth.

While contoured matrix bands are commonly used, they have been subject to numerous disadvantages. For example, matrix bands made from overly flexible and ductile materials may present problems during placement of the matrix band, especially where the interproximal distance is smaller than the thickness of the matrix band. Additionally, matrix bands of this type have required a tightening and retaining tool or the like to apply and hold them in position after they are placed on the tooth. Then, after completing the dental procedure, the matrix bands have to be opened with special cutting instruments, such as scissors and scalpels.

In one embodiment, a dental matrix band is provided that comprises an elongated body having first and second opposing ends adapted to wrap around a tooth to be restored, and having first and second opposing longitudinal edges extending between the first and second opposing ends; a first line of weakness in the elongated body intermediate the first and second opposing ends and extending substantially between the first and second opposing longitudinal edges, wherein the elongated body is separable along the first line of weakness; and a fixture adjacent the first line of weakness adapted to tear the elongated body along the first line of weakness when a sufficient force is applied to the fixture.

In another embodiment, a dental matrix band is provided that comprises an elongated body having first and second opposing ends adapted to wrap around a tooth to be restored, and having first and second opposing longitudinal edges extending between the first and second opposing ends; a first line of weakness in the elongated body intermediate the first and second opposing ends and extending substantially between the first and second opposing longitudinal edges, wherein the elongated body is separable along the first line of weakness; a second line of weakness in the elongated body spaced apart from the first line of weakness and extending substantially between the first and second opposing longitudinal edges, wherein a removable section is formed in the elongated body between the first and second lines of weakness; a fixture adjacent the first and second lines of weakness adapted to tear the elongated body along the first and second lines of weakness to separate the removable section from the elongated body when a sufficient force is applied to the fixture; and an annealed section in the elongated body intermediate the first and second opposing ends and spaced apart from the first and second lines of weakness, wherein the annealed section is more ductile than a remainder of the elongated body.

In yet another embodiment, a dental matrix band is provided that comprises an elongated body having first and second opposing ends adapted to wrap around a tooth to be restored, and having first and second opposing longitudinal edges extending between the first and second opposing ends; and an annealed section in the elongated body intermediate the first and second opposing ends, wherein the annealed section is more ductile than a remainder of the elongated body,

In yet another embodiment, a method of performing a dental restoration is provided that comprises applying a dental matrix band to a tooth to be restored, wherein the matrix band includes an elongated body having first and second opposing ends adapted to wrap around a tooth to be restored, and having first and second opposing longitudinal edges extending between the first and second opposing ends; and a first line of weakness in the elongated body intermediate the first and second opposing ends and extending substantially between the first and second opposing longitudinal edges, wherein the elongated body is separable along the first line of weakness; and a fixture adjacent the first line of weakness adapted to tear the elongated body along the first line of weakness when a sufficient force is applied to the fixture. The method further comprises tightening the matrix band on the tooth with a tensioning device; applying restoration material to the tooth; applying a sufficient force on the fixture to tear the elongated body along the first line of weakness thereby severing the elongated body between the first and second opposing ends; and removing the severed matrix band from around the tooth.

In yet another embodiment, a method of performing a dental restoration is provided that comprises applying a dental matrix band to a tooth to be restored, wherein the matrix band includes an elongated body having first and second opposing ends adapted to wrap around a tooth to be restored, and having first and second opposing longitudinal edges extending between the first and second opposing ends; and an annealed section in the elongated body intermediate the first and second opposing ends, wherein the annealed section is more ductile than a remaining portion of the elongated body, The method further comprises burnishing the annealed section with a burnishing tool to adapt the annealed section to an adjacent tooth; applying restoration material to the tooth; and removing the dental matrix band from around the tooth,

The invention will now be further described by way of example with reference to the accompanying drawings, in which:

FIG. 1 is a side elevational view of a dental matrix band according to one embodiment of the invention, illustrating one line of weakness.

FIG. 2 is a side elevational view of a dental matrix band according to another embodiment of the invention, illustrating two lines of weakness.

FIG. 3 is a perspective view of the dental matrix band of FIG. 2 and a dental matrix tightener according to one embodiment of the invention.

FIG 4 is a perspective view of the dental matrix band and tightener of FIG. 3 illustrating the matrix band placed and tightened on a tooth.

FIG. 5 is a perspective view of the matrix band shown in FIG. 4, following the partial tearing of the elongated body of the matrix band along the lines of weakness.

FIG. 6 is a perspective view of the matrix band shown in FIG. 4, showing a burnishing tool inserted into a Type II dental cavity.

FIG. 7 is a partially-transparent perspective view of the matrix band and burnishing tool shown in FIG 6, illustrating the burnishing of an annealed section of the dental matrix band.

FIG. 8 is a perspective view of a dental matrix band according to one embodiment of the invention.

FIG. 9 is a perspective view of a dental matrix band according to another embodiment of the invention.

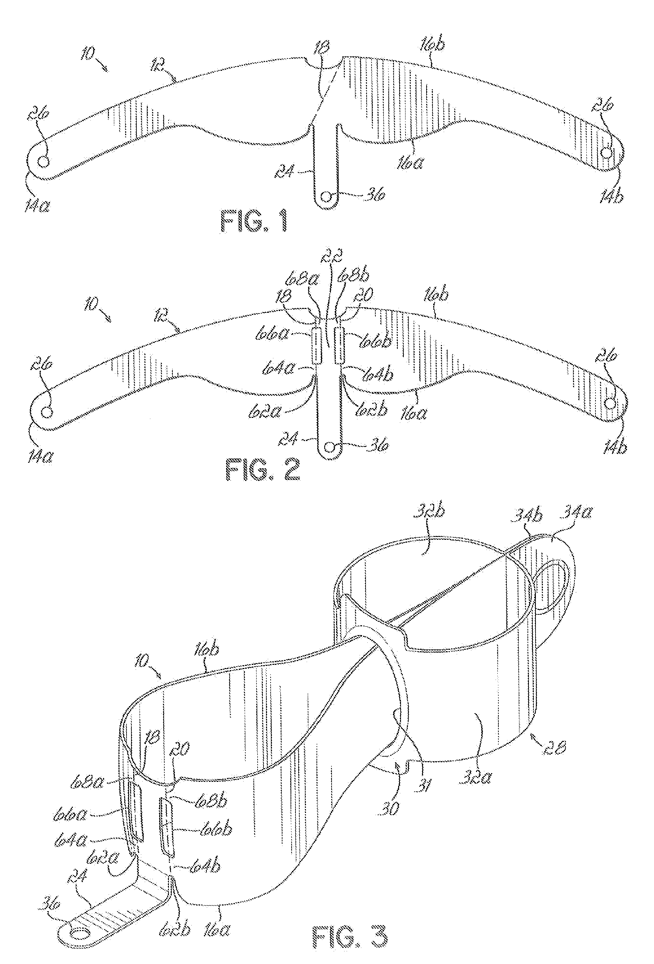

With respect to the figures, FIG. 1 illustrates a dental matrix band **10** according to one embodiment of the invention. The band **10** comprises an elongated body **12**, first and second opposing ends **14a,b** and first and second opposing longitudinal edges **16a,b**. A first line of weakness **18** in the elongated body **12** lies between the first and second opposing ends **14a,b** and extends substantially between the first and second opposing longitudinal edges **16a,b**. A fixture **24** is adjacent the first line of weakness **18** and extends from longitudinal edge **16a**.

The dental matrix band **10** may comprise a flexible material such as those commonly used within the art. Suitable materials include thermoplastics, such as polyesters, and metals, such as aluminum, titanium, iron and alloys thereof. Exemplary matrix band materials include polyethylene terephthalate (PET), aluminum, titanium, and stainless steel. Optionally, the matrix band material may further comprise a coating, such as a fluoropolymer, to impart favorable surface properties, such as reduced adhesion to the filling material.

The elongated body **12** may be in the form of a strip, wherein the opposing longitudinal edges **16a,b** are approximately parallel. Alternatively, as shown in FIGS. 1-9, the body **12** may be contoured to provide an anatomical adaptation around a tooth **42** to be restored.

As shown in FIG. 2, the matrix band **10** may further comprise a second line of weakness **20** that is spaced apart (i.e., separated by a distance greater than zero) from the first line of weakness **18** to form a removable section **22** within the elongated body **12** of the dental matrix band **10**. The fixture **24** is adjacent both the first and second lines of weakness **18, 20** and extends from longitudinal edge **16a** of the removable section **22**. The fixture **24** may be contiguous with or attached to the removable section **22**.

The elongated body **12** is separable along a line of weakness. The phrase "line of weakness" as used herein defines a manufactured region for an intentional failure in the elongated body **12** that will tear or separate when a sufficient force (i.e., the opening force) is applied to the fixture **24**. The amount of force to cause a line of weakness to fail may vary, but it is less than the adjoining regions of the elongated body **12**. In other words, a line of weakness is designed to fail before the adjoining regions fail and requires less force to do so.

As used herein, the opening force (Fₒₚ) is the force required to separate the elongated body **12** along a line of weakness, and the force of failure (Fₗ) is the force required to separate the elongated body absent any line of weakness. According to one embodiment of the invention, the opening force (Fₒₚ) is less than about 80% of the force of failure (Fₜ), for example, less than about 70% of F_{f}, or less than about 60% of F_{f}. According to another embodiment, the Fₒₚ is less than about 50% of Fᵢ or less than about 25% of Fᵢ. By way of further example, the Fₒₚ is about 10% to about 75% of F_{f}, or about 20% to about 60% of F_{f}, or about 25% to about 50% of F_{f}.

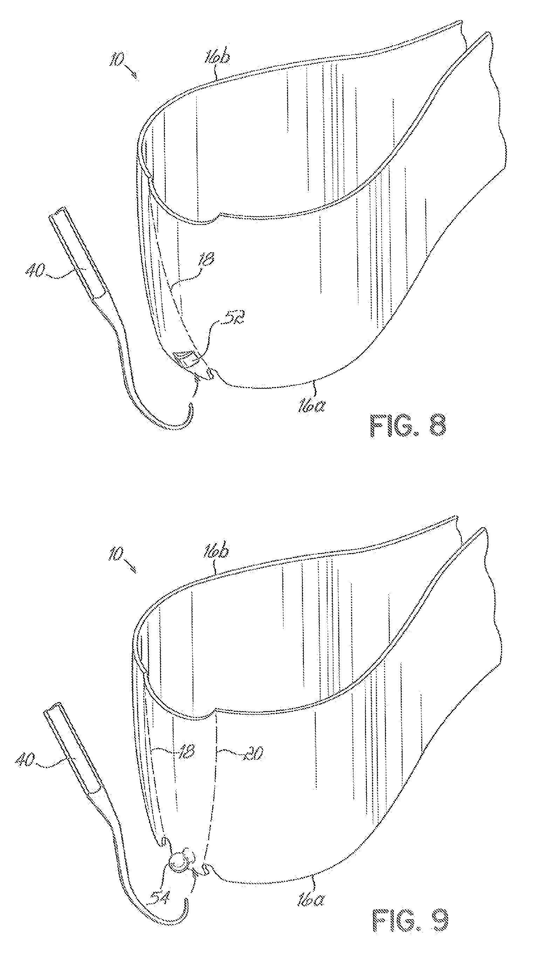

In FIGS. 1, 2, 8 and 9, the first line of weakness **18** is illustrated by a dashed line. It should be appreciated by one having ordinary skill in the art, that a line of weakness may comprise a scored line, a pattern of perforation, or a ductile region that is substantially more ductile than the adjacent longitudinal regions, wherein the line of weakness extends substantially between the first and second opposing longitudinal edges **16a,b**. In one embodiment, first line of weakness **18** is a scored line. In another embodiment, first line of weakness **18** is a series of small holes, also known as a perforation line. In yet another embodiment, first line of weakness **18** is a series of spaced, end-to-end slits in the elongated body **12**. In yet another embodiment, first line of weakness **18** is a linear region extending between the first and second longitudinal edges **16a,b** that is significantly more ductile than the adjoining longitudinal regions. The second line of weakness **20**, when present, may be the same or different than the first line of weakness **18**. Moreover, the second line of weakness **20** may be parallel to the first line of weakness **18**, or the lines of weakness **18, 20** may be non-parallel, such as the V-shape depicted in FIG. 9.

In reference to FIG. 3, the removable section **22** is contiguous with fixture **24**. The first opposing longitudinal edge **16a** is contoured to form notches **62a,b** longitudinal to fixture **24**. Sequentially transverse to notches **62a,b** are wall sections **64a,b** and **68a,b** that are each separated by elongated apertures **66a,b**. For example, in FIG. 2, the first line of weakness **18** is formed by the transverse sequence of a notch **64a**, a first wall section **64a**, an aperture **66a** and a second wall section **68a**, and the second line of weakness is formed by the transverse sequence of a notch **64b**, a first wall section **64b**, an aperture **66b** and a second wall section **68b**. In one embodiment, wall sections **64a,b** and **68a,b** are thinned relative to the thickness of adjacent sections of the elongated body **12**.

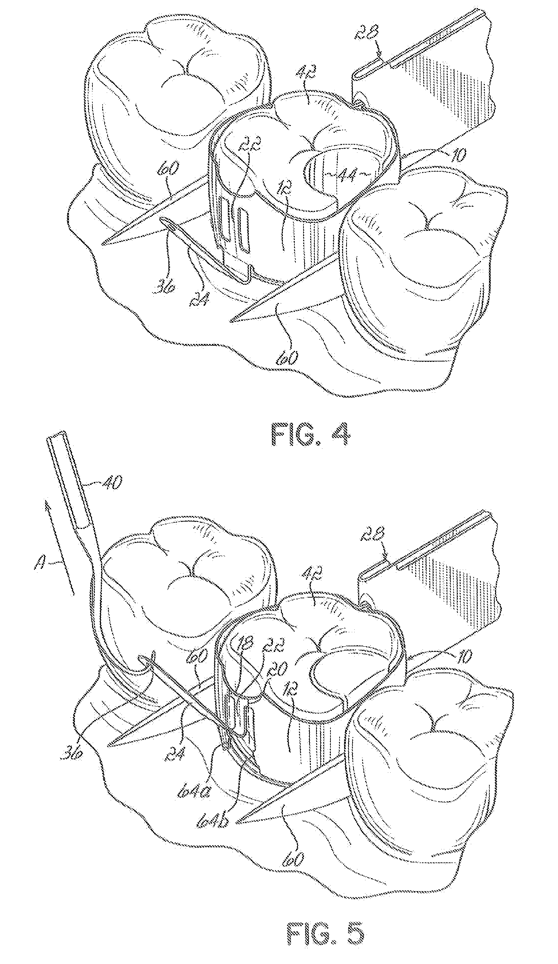

Fixture **24** is adjacent the first line of weakness **18** and is adapted to tear the elongated body **12** along the first line of weakness **18** when a sufficient force is applied to the fixture **24**. The fixture **24** may be a tab that is contiguous with the elongated body **12** and continuous with the first longitudinal edge **16a**, as shown in FIG. 1. The fixture **24** may also be attached to the elongated body **12**. The fixture **24** may be attached by any suitable means, such as welding, fusing, gluing, crimping, and riveting, for example. The fixture **24** is not restricted to any particular shape, but may be configured to engage with a tool **40** suitable for applying the requisite force to tear the elongated body **12** along the first line of weakness **18**, as will be discussed in more detail below with reference to FIG. 5. The fixture **24**, in a specific embodiment, may be a handle **52** or knob **54** attached to the elongated body **12**, as shown in FIGS, 8 and 9, respectively, With particular reference to FIGS. 1 and 2. the fixture **24** may include an aperture **36** configured to receive a tool **40** therein for applying force to the fixture **24**. However, these fixtures are merely exemplary rather than intended to be limiting. Alternative fixtures may include any structure engagable by a standard dental instrument readily available to a dentist that is capable of applying a force sufficient to tear the fixture at the line(s) of weakness, thereby eliminating the need for special instruments to effect a removal of the band **10**. Optional a notch or an equivalent thereof, as shown in FIGS. 1-9, may be present adjacent the fixture **24** at a terminus of the first and/or second line of weakness **18** (**20**) to facilitate focusing the applied force along the line(s) of weakness.

The opposing ends **14a,b** may be adapted to facilitate attachment to a tensioning device, also known as a tightener. As shown in FIGS. 1 and 2, an aperture **26** may be formed in each of the opposing ends **14a,b** to enable attachment to a tightener, such as the type disposed in U.S. Patent No. 4,824,365 to von Weissenfluh. For example, as shown in FIG. 3, a loop-shaped tightener **28** is attached to the dental matrix band **10** of FIG. 2. In one embodiment, the tightener **28** is a single strip having a central portion **30** between opposable deformable portions **32a,b** that together form the loop. Two respective terminal end portions **34a,b** extend from the deformable portions **32a,b** to close the loop, The central portion **30** of the tightener **28** includes an opening **31** that slidably receives both first and second opposing ends **14a,b** of the elongated body **12** between the deformable portions **32a,b**. The respective terminal end portions **34a,b** of the tightener **28** extend along each side of the first and second opposing ends **14a,b** of the elongated body **12** and are fastened to the first and second opposing ends **14a,b** to operably couple the opposing deformable portions **32a,b** of the loop-shaped tightener **28** and the elongated body **12** of the dental matrix band **10**. The tightener **28** comprises a material that may be permanently deformed by application of pressure to said opposing deformable portions **32a,b** of said tightener **28**. For example, the tightener **28** may comprise aluminum.

In particular reference to FIGS. 4 and 5, the dental matrix band **10** of FIGS. 2 and 3 is shown in surrounding relation on a tooth **42** having a dental cavity **44** and tightened thereon by tightener **28.** Once the band **10** is tightened in place, the tooth **42** can then be restored by filling the cavity **44.** Once restored, FIG. 5 illustrates a dental tool **40,** such as an explorer, engaged with the aperture **36** of fixture **24** and applying a sufficient force, represented by line A, to the fixture **24** to partially tear the elongated body **12** along first and second lines of weakness **18, 20.** The removable section **22** is shown partially removed from the elongated body **12** by the severance of the longitudinal edge **16a** at the wall sections **64a,b.** Once the tearing is complete and the removable section **22** has been removed by tool **40,** the elongated body **12** is separated between the first and second opposing ends **14a,b** and the separated or severed matrix band can be easily removed by pulling on the opposing ends **14a,b.** The need for cutting instruments to cut the matrix band off the restored tooth is thereby eliminated.

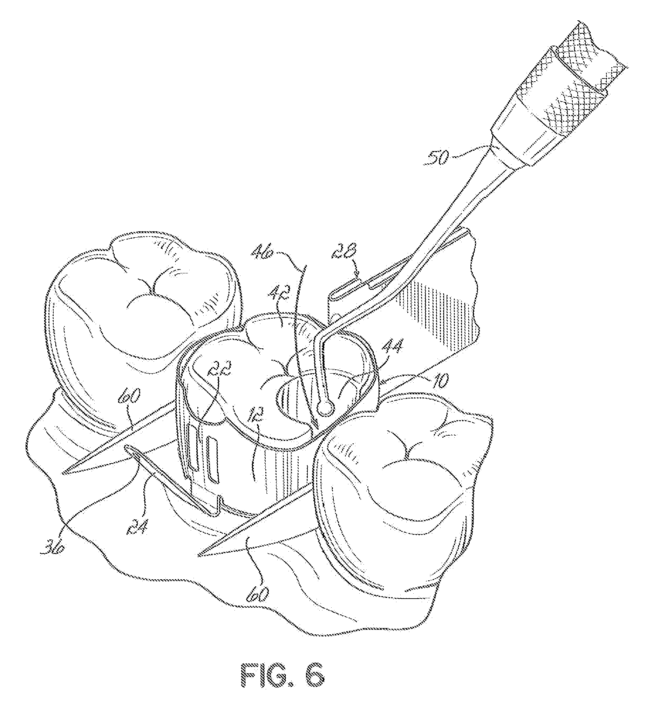

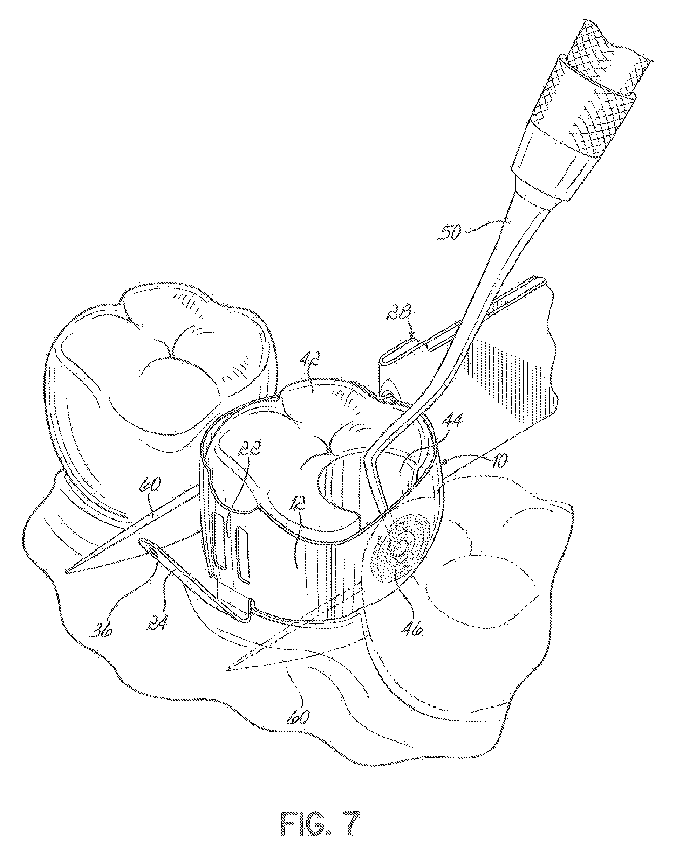

In accordance with another embodiment of the invention, FIGS. 6 and 7 depict a dental matrix band **10** further comprising an annealed section **46** between the first and second opposing ends **14a,b,** wherein the annealed section **46** is more ductile than a remaining portion of the elongated body **12,** *i.e*., more ductile than the non-annealed portions. In comparing ductility of the annealed section **46** to the remaining portion of the elongated body **12** that is not annealed, comparison should not be made to the portions of the elongated body that comprise the lines of weakness **18, 20,** as those portions may themselves comprise ductile regions adapted to enable tearing of the elongated body **12** upon application of sufficient force to the adjacent fixture. Thus "remaining portion" refers to those portions of the elongated body that are neither lines of weakness **18, 20** nor annealed section **46.** The annealed section is ideally located in a portion of the elongated body adapted to be placed between adjacent teeth in the proximal area adjacent the cavity **44,** *i.e*., at the contact point between the restoration and the adjacent tooth. The annealed section **46** provides a ductile region that may be burnished with a burnishing tool **50**. The ductile region may be shaped, *i.e*., inelastically deformed, which enables facile adaptation of the matrix band **10** in the proximal area. The non-annealed portion of the elongated body **12** maintains the stiffness needed for easy and reliable placement of the band **10**.

Annealing may be accomplished by means commonly known in the art. An area of the elongated body **12** may be locally heated to an annealing temperature with a heating source under an inert atmosphere and subsequently followed by cooling. In one embodiment, an annealed section **46** was prepared in a dental matrix band **10** made of cold thread stainless steel having a tensile strength between about 1000 N/mm² to about 1500 N/mm², by performing a local annealing process with a heating source and under gas protection to avoid oxidation. To form the annealed section **46**, a section of the elongated body **12** was heated to above 900 °C to convert the section of cold thread stainless steel to dead soft steel. The temperature, the atmospheric conditions, the manner of cooling and other annealing parameters may vary according to the properties of the material that comprises the elongated body **12.**

In one embodiment, the annealed section **46** does not extend to the first and second opposing longitudinal edges **16a,b.** Maintaining a non-annealed region adjacent the opposing longitudinal edges **16a,b** facilitates improved performance as the dental matrix band **10** is placed on the tooth **42** through the contact point with the adjacent tooth, In embodiments further having line(s) of weakness **18 (20),** the annealed section **46** is spaced apart from the line(s) of weakness whereby the annealed section **46** may be positioned in the proximal space while the line(s) of weakness **18 (20)** and fixture **24** are accessible at the buccal or lingual surface of the tooth **42.** It may be understood that embodiments having a line of weakness **18** and embodiments having an annealed section **46** may be combined as shown in FIGS. 6 and 7, or either embodiment may be used without the other, each offering its own benefits.

In further reference to FIGS. 6 and 7, the dental matrix band **10** comprising an annealed section **46** is shown in surrounding relation on a tooth **42** having a dental cavity **44.** The annealed section **46** is positioned to be within the interproximal space. Once the matrix band **10** is positioned, it may be secured in place using interdental wedges **60** and a tightener **28,** as shown. In an alternative embodiment, which is not shown, the matrix band **10** may be secured using only interdental wedges 6**0.** The annealed section **46** may be burnished with a burnishing tool 60 to form the ductile region to the contour of the adjacent tooth. The dental cavity **44** may be filled with any suitable restoration material. Following completion of filling the cavity **44,** the dental matrix band **10** may be removed.

The dental matrix band **10** according to embodiments of the invention is not restricted from use with other dental devices and equipment. Instead, the dental matrix band **10** may be used in conjunction with other dental equipment, such as interdental wedges 60, as shown in FIGS. 4-7.

While the invention has been illustrated by the description of one or more embodiments thereof, and while the embodiments have been described in considerable detail, additional advantages and modifications will readily appear to those skilled in the art. The various features shown and described herein may be used alone or in any combination.

## Claims

1. A dental matrix band comprising:
an elongated body having first and second opposing ends adapted to wrap around a tooth to be restored, and having first and second opposing longitudinal edges extending between said first and second opposing ends;
a first line of weakness in said elongated body intermediate said first and second opposing ends and extending substantially between said first and second opposing longitudinal edges, wherein said elongated body is separable along said first line of weakness; and
a fixture adjacent said first line of weakness adapted to tear said elongated body along said first line of weakness when a sufficient force is applied to said fixture.

2. The dental matrix band of claim 1, wherein said fixture includes a tab, a handle or a knob.

3. The dental matrix band of claim 1 or 2, wherein said fixture is a tab that is continuous with said first longitudinal edge.

4. The dental matrix band of any preceding claim, wherein said fixture is a tab attached to said elongated body.

5. The dental matrix band of any preceding claim, wherein said fixture complises an aperture configured to receive a tool therein for applying said sufficient force.

6. The dental matrix band of any preceding claim, further comprising:
a second line of weakness in said elongated body spaced apart from said first line of weakness and extending substantially between said first and second opposing longitudinal edges, wherein a removable section is formed in said elongated body between said first and second lines of weakness.

7. The dental matrix band of claim 6, wherein said second line of weakness is approximately parallel to said first line of weakness.

8. The dental matrix band of claim 6 or 7, wherein said removable section comprises said fixture.

9. The dental matrix band of any preceding claim, wherein said first line of weakness comprises a score, a pattern of perforation, or a ductile region that is substantially more ductile than adjacent longitudinal regions, wherein said first line of weakness extends between said first and second opposing longitudinal edges.

10. The dental matrix band of any preceding claim, wherein said elongated body comprises a metal.

11. The dental matrix band of claim 10, wherein said metal is selected from the group consisting of aluminum, titanium, iron and alloys thereof.

12. The dental matrix band of any preceding claim, wherein said elongated body further comprises an annealed section between first and second opposing ends and spaced apart from said first line of weakness, wherein said annealed section is more ductile than a remaining portion of said elongated body.

13. The dental matrix band of any preceding claim further comprising:
a loop-shaped tightener attached to said elongated body, said tightener comprising a single strip having a central portion between opposable deformable portions that extend therefrom and terminate in respective end portions, said central portion of said tightener including an opening which slidably receives both said first and second opposing ends of said elongated body, and said respective end portions extending along and coupled to said first and second opposing ends of said elongated body to form said opposing deformable portions around said first and second opposing ends.

14. The dental matrix band of claim 13, wherein said tightener comprises a material that may be permanently deformed by application of pressure to said opposing deformable portions of said tightener.

15. The dental matrix band of claim 14, wherein said tightener comprises aluminum.
